# EUROPEAN PATENT SPECIFICATION

(11) **EP 2 153 483 B1**
(45) Date of publication and mention of the grant of the patent: **16.11.2011**
(21) Application number: 08756350.8
(22) Date of filing: 28.05.2008
(51) Int. Cl.: H01M 4/86, H01M 4/90, H01M 4/92, H01M 8/02, H01M 8/10

(54) **MEMBRANE ELECTRODE ASSEMBLY FOR FUEL CELL**
MEMBRAN-ELEKTRODEN-BAUGRUPPE FÜR EINE BRENNSTOFFZELLE
ENSEMBLE D'ÉLECTRODE À MEMBRANE POUR PILE À COMBUSTIBLE

(30) Priority: 01.06.2007 US 756997
(43) Date of publication of application: 17.02.2010
(73) Proprietor: Cabot Corporation, Boston, MA 02210 (US)
(72) Inventor: LEI, Hanwei, Albuquerque, NM 87122 (US); ATANASSOVA, Paolina, Albuquerque, NM 87122 (US); WALL, Ryan, Cash, Albuquerque, NM 87120 (US); MIESEM, Ross, A., Albuquerque, NM 87112 (US); SUN, Yipeng, Albuquerque, NM 87111 (US); RICE, Gordon, L., Albuquerque, NM 87112 (US)
(74) Representative: Serravalle, Marco
(86) International application number: PCT/US2008/064947
(87) International publication number: WO 2008/150785

(56) References cited:
- EP-A- 1 467 422
- WO-A-2006/018257
- WO-A-2006/045606
- WO-A-2007/061248
- US-A1- 2003 121 603
- PARK ET AL: "Modification of carbon support to enhance performance of direct methanol fuel cell" JOURNAL OF POWER SOURCES, ELSEVIER, AMSTERDAM, NL, vol. 162, no. 2, 15 November 2006 (2006-11-15), pages 1023-1028, XP005764978 ISSN: 0378-7753
- NAKAGAWA N ET AL: "Performance of a direct methanol fuel cell operated at atmospheric pressure" JOURNAL OF POWER SOURCES, ELSEVIER, AMSTERDAM, NL, vol. 118, no. 1-2, 25 May 2003 (2003-05-25), pages 248-255, XP004425688 ISSN: 0378-7753

## Description

### FIELD

This invention relates to a membrane electrode assembly for a fuel cell and, in particular, a direct methanol fuel cell.

### BACKGROUND

Fuel cells are electrochemical devices in which the energy from a chemical reaction is converted to direct current electricity. During operation of a fuel cell, a continuous flow of fuel, e.g., hydrogen (or a liquid fuel such as methanol), is fed to the anode while, simultaneously, a continuous flow of an oxidant, e.g., air, is fed to the cathode. The fuel is oxidized at the anode causing a release of electrons through the agency of a catalyst. These electrons are then conducted through an external load to the cathode, where the oxidant is reduced and the electrons are consumed, again through the agency of a catalyst. The constant flow of electrons from the anode to the cathode constitutes an electrical current which can be made to do useful work.

The Polymer Electrolyte Membrane Fuel Cell (PEMFC) is one type of fuel cell likely to find wide application as a more efficient and lower emission power generation technology in a range of markets including stationary and portable power devices and as an alternative to the internal combustion engine in transportation. PEM fuel cells use a solid polymer membrane as an electrolyte and porous carbon electrodes containing a platinum catalyst. They need only hydrogen, oxygen from the air to operate and do not require corrosive fluids like some fuel cells. They are typically fueled with hydrogen supplied from storage tanks or onboard reformers.

The Direct Methanol Fuel Cell (DMFC) is similar to the PEMFC in that the electrolyte is a solid polymer membrane and the charge carrier is the hydrogen ion (proton). However, liquid methanol (CH₃OH) is oxidized in the presence of water at the anode generally using a platinum/ruthenium catalyst to produce CO₂, hydrogen ions and the electrons that travel through the external circuit as the electric output of the fuel cell. The hydrogen ions travel through the electrolyte and react with oxygen from the air and the electrons from the external circuit to form water at the cathode completing the circuit. As a result, the reactions occurring in a DMFC can be summarized as follows:
Anode: CH₃OH + H₂O → CO₂ + 6H⁺ + 6e⁻
Cathode: 6H⁺ + 6e⁻ + 3/2O₂ → 3H₂O
Overall: 2CH₃OH+3O₂ → 2CO₂ + 6H₂O + energy

In the PEMFC and DMFC the combined laminate structure formed from the membrane and the two electrodes is known as a membrane electrode assembly (MEA). The MEA will typically comprise several layers, but can in general be considered, at its basic level, to have five layers, which are defined principally by their function. On either side of the membrane an anode and cathode electrocatalyst are incorporated to increase the rates of the desired electrode reactions. In contact with the electrocatalyst-containing layers, on the opposite face to that in contact with the membrane, are anode and cathode gas diffusion substrate layers.

The anode gas diffusion substrate is designed to be porous and to allow the reactant hydrogen or methanol to enter from the face of the substrate exposed to the reactant fuel supply, and then to diffuse through the thickness of the substrate to the layer which contains the electrocatalyst, usually platinum or platinum-ruthenium metal based, to maximize the electrochemical oxidation of hydrogen or methanol. The anode electrocatalyst layer is also designed to comprise some level of the proton-conducting electrolyte in contact with the same electrocatalyst reaction sites. With acidic electrolyte types protons are produced as the product of the reaction occurring at the anode and these can then be efficiently transported from the anode reaction sites through the electrolyte to the cathode layers.

The cathode gas diffusion substrate is also designed to be porous and to allow oxygen or air to enter the substrate and diffuse through to the electrocatalyst layer reaction sites. The cathode electrocatalyst combines the protons with oxygen to produce water and is also designed to comprise some level of the proton-conducting electrolyte in contact with the same electrocatalyst reaction sites. Product water then has to diffuse out of the cathode structure. The structure of the cathode has to be designed such that it enables the efficient removal and/or balance of the product water generated in the electrocatalyst cathode layer or passed through the membrane.

The complete MEA can be constructed by several methods. The electrocatalyst layers can be bonded to one surface of the gas diffusion substrates to form what is known as a gas diffusion electrode. The MEA is then formed by combining two gas diffusion electrodes with the solid proton-conducting membrane. Alternatively, the MEA may be formed from two porous gas diffusion substrates between which is sandwiched a solid proton-conducting polymer membrane having electrocatalyst layers on both sides (also referred to as a catalyst coated membrane or CCM); or indeed the MEA may be formed from one gas diffusion electrode, one liquid diffusion substrate and a solid proton-conducting polymer having an electrocatalyst layer on the side facing the gas/liquid diffusion substrate.

Although the theory behind Direct Methanol Fuel Cell (DMFC) operation has been known for many years, there has been difficulty producing commercially viable fuel cells due to technological barriers and the high cost of fuel cell components such as precious metal Pt used in the catalyst layers.

Among the critical issues that must be addressed for the successful commercialization of fuel cells is developing MEAs exhibiting the highest possible performance expressed as power density per unit area (mW/cm²) at certain operating voltage - typically 0.4 to 0.55 V for the DMFC system. Producing MEAs with high absolute performance is highly desirable because it allows the manufacture of smaller, lighter, longer running and more efficient DMFC-based power sources. Cost and durability are the other two major requirements of DMFC MEAs.

There are several key elements in ensuring a high performing MEA in DMFC configuration, particularly electrocatalyst composition and loading, printed layers and MEA structures, type of membrane and gas diffusion electrodes. Of these, the electrocatalyst is the most significant performance and cost factor. Pt and PtRu blacks are the electrocatalysts widely used for achieving high power densities, however they suffer from inherently low utilization when printed in electrode layers. Moreover, they lack the requisite durability and are too expensive for commercial viability. Thus, in more recent applications, the electrocatalytic material, particularly Pt and PtRu, is dispersed as nanoparticles on a particulate support material, such as a carbon black, a metal oxide or a combination thereof.

The motivation for developing supported catalysts is the potential for high precious metal utilization, which becomes especially important when the DMFC devices are targeted for mass market introduction. Achieving high utilization of the expensive precious metal catalysts is highly desirable since it has impact on both performance and the cost. Ability to achieve highest performance value expressed by highest power with lowest amount of precious metal (mW/mgPt) ensures DMFC devices can be cost competitive with the existing power sources and be successfully commercialized. Another critical factor in meeting the commercialization goals for DMFC is meeting durability targets, which are typically several thousand hours. Supported electrocatalysts typically exhibit improved durability as compared with metal blacks.

U.S. Patent Application Publication No. 2004/0265678, published December 30, 2004, discloses a catalyst electrode for a fuel cell comprising a catalyst powder and a solid polymer electrolyte, wherein said catalyst powder comprises a catalytic substance supported on a conductive powder, and wherein the weight ratio of said catalytic substance to said catalyst powder is in the range of 55 to 75 wt %, and the areal density of said catalytic substance in said catalyst powder is in the range of 1 to 3 mg/cm². When used in a DMFC at 80°C, these electrodes exhibit maximum power output densities per unit area up to 150 mW/cm² when tested with oxygen or airflow of 500 ccm on the cathode and 5ml/min of 1 M methanol on the anode.
Chan Hee Park et al. (Journal of Power Sources, 162 (2006) 1023-1028) discloses a carbon black powder modified by applying a coating of a proton conducting polymer electrolyte. The carbon is intended for use as a catalyst support in the preparation of Pt-Ru catalysts for direct methanol fuel cells.
WO 2006/045606 discloses a method for manufacture of supported noble metal based alloy catalysts with a high degree of alloying and a small crystallite size. The method is based on the use of polyol solvents as reaction medium and comprises of a two-step reduction process in the presence of a support material.
US 2003/0121603 describes a manufacturing method of Membrane-Electrode-Gasket-Assemblies (MEGAs) used for polymer electrolyte fuel cells wherein a polymer electrolyte membrane is formed directly on an electrode.

While supported PtRu/C and Pt/C electrocatalysts with high intrinsic activity are critical factors, the power output characteristics of an MEA depend to a large extent on the MEA structure, and more specifically the combination of gas diffusion layers, anode and cathode layer thickness, type of membrane and MEA lamination conditions. In addition, it is desirable that the operation of MEA in a fuel cell is conducted at current densities and operating voltages between 0.4 and 0.55V, not at a maximum power output conditions, which correspond to operating voltages lower than 0.35 V where the MEA performance is more unstable. It is also desirable that maximum stable performance is achieved at temperatures lower than 80°C, more preferably between 40°C and 70°C. The ability to achieve simultaneously high absolute performance at practical voltages and high normalized performance expressed in mW/mgPt is most desirable and can be achieved through design of the present MEA structure.

The present invention seeks to provide a membrane electrode assembly (MEA) for a fuel cell, and in particular a direct methanol fuel cell, in which the utilization of expensive electrocatalytic material, typically Pt and PtRu, and the construction of the MEA are arranged so that the absolute performance of the MEA (expressed in mW/cm² at between 0.4 to 0.5 V) and normalized performance (expressed in mW/mgPt) can be improved for targeted operating conditions, such as temperature and operating voltage.

### SUMMARY

The invention is defined in claim 1. In one aspect, the present invention resides in a membrane electrode assembly comprising:
(a) a solid electrolyte polymer membrane;
(b) an anode electrocatalyst layer disposed at one surface of the membrane and comprising a first electrocatalyst composition comprising carbon substrate particles and nanoparticles comprising an alloy of platinum and ruthenium disposed on the surface of the substrate particles;
(c) a cathode electrocatalyst layer disposed at an opposite surface of the membrane, the cathode layer comprising a second electrocatalyst composition different from said first electrocatalyst composition and comprising carbon substrate particles and nanoparticles comprising platinum disposed on the surface of the substrate particles;
(d) an anode gas diffusion layer disposed at the surface of said anode electrocatalyst layer remote from said membrane; and
(e) a cathode gas diffusion layer disposed at the surface of said cathode electrocatalyst layer remote from said membrane,
wherein said membrane electrode assembly, when operating in a direct methanol fuel cell with an active area of 25 cm² and under conditions including a supply of 1 M methanol to the anode electrocatalyst layer at a rate of 3 ml per minute, a supply of air to the cathode electrocatalyst layer at a rate 400 sccm, an output voltage of 0.4 volt and a temperature of 70°C, provides a power output in excess of 120 mW/cm² and a normalized performance in excess of 34 mW/mgPt.

In one embodiment, said assembly, when operating in a direct methanol fuel cell with an active area of 25 cm² and under conditions including a supply of 1M methanol to the anode electrocatalyst layer at a rate of 3 ml per minute, a supply of air to the cathode electrocatalyst layer at a rate 400 sccm, an output voltage of 0.4 volt and a temperature of 60°C, provides a power output in excess of 105 mW/cm² and a normalized performance in excess of 30 mW/mgPt.

In another embodiment, said assembly, when operating in a direct methanol fuel cell with an active area of 25 cm² and under conditions including a supply of 1M methanol to the anode electrocatalyst layer at a rate of 3 ml per minute, a supply of air to the cathode electrocatalyst layer at a rate 400 sccm, an output voltage of 0.4 volt and a temperature of 50°C, provides a power output in excess of 90 mW/cm² and a normalized performance in excess of 27 mW/mgPt.

Conveniently, said assembly, when operating in a direct methanol fuel cell with an active area of 25 cm² and under conditions including a supply of 1M methanol to the anode electrocatalyst layer at a rate of 3 ml per minute, a supply of air to the cathode electrocatalyst layer at a rate 400 sccm, an output voltage of 0.45 volt and a temperature of 70°C, provides a power output in excess of 120 mW/cm² and a normalized performance in excess of 30 mW/mgPt.

In one embodiment, said assembly, when operating in a direct methanol fuel cell with an active area of 25 cm² and under conditions including a supply of 1M methanol to the anode electrocatalyst layer at a rate of 3 ml per minute, a supply of air to the cathode electrocatalyst layer at a rate 400 sccm, an output voltage of 0.45 volt and a temperature of 60°C, provides a power output in excess of 95 mW/cm² and a normalized performance in excess of 27 mW/mgPt.

In another embodiment, said assembly, when operating in a direct methanol fuel cell with an active area of 25 cm² and under conditions including a supply of 1M methanol to the anode electrocatalyst layer at a rate of 3 ml per minute, a supply of air to the cathode electrocatalyst layer at a rate 400 sccm, an output voltage of 0.45 volt and a temperature of 50°C, provides a power output in excess of 75 mW/cm² and a normalized performance in excess of 22 mW/mgPt.

Conveniently, said assembly, when operating in a direct methanol fuel cell with an active area of 25 cm² and under conditions including a supply of 1M methanol to the anode electrocatalyst layer at a rate of 3 ml per minute, a supply of air to the cathode electrocatalyst layer at a rate 400 sccm, an output voltage of 0.5 volt and a temperature of 70°C, provides a power output in excess of 80 mW/cm² and a normalized performance in excess of 23 mW/mgPt.

In another embodiment, said assembly, when operating in a direct methanol fuel cell with an active area of 25 cm² and under conditions including a supply of 1M methanol to the anode electrocatalyst layer at a rate of 3 ml per minute, a supply of air to the cathode electrocatalyst layer at a rate 400 sccm, an output voltage of 0.5 volt and a temperature of 60°C, provides a power output in excess of 65 mW/cm² and a normalized performance in excess of 19 mW/mgPt.

In another embodiment, said assembly, when operating in a direct methanol fuel cell with an active area of 25 cm² and under conditions including a supply of 1M methanol to the anode electrocatalyst layer at a rate of 3 ml per minute, a supply of air to the cathode electrocatalyst layer at a rate 400 sccm, an output voltage of 0.5 volt and a temperature of 50°C, provides a power output in excess of 45 mW/cm² and a normalized performance in excess of 14 mW/mgPt.

As used herein, the term "active area" of a membrane electrode assembly is used to mean the geometrical area in cm² of the anode or cathode electrocatalyst layer on the solid electrolyte polymer membrane exposed to methanol or air respectively by way of the anode or cathode gas diffusion layer. Typically, the active areas for the anode and cathode electrocatalyst layers are substantially identical. In addition, it is to be appreciated that, although the above power output and normalized performance values are given for a membrane electrode assembly with an active area of 25 cm², substantially the same numbers can be achieved for membrane electrode assemblies with different active areas by proportionally increasing or decreasing the corresponding reactant flows depending on the change of the active surface area.

The ratio of the weight per cm² of active area of said alloy of platinum and ruthenium present in said anode electrocatalyst layer (b) to the weight per cm² of active area of platinum present in said cathode electrocatalyst layer (c) is between 1.5:1 and 3:1.

Conveniently, the ratio of the thickness of the anode electrocatalyst layer to the thickness of the cathode electrocatalyst layer is greater than 1:1 and typically is greater than 1.5:1.

Said alloy of platinum and ruthenium is present in said anode electrocatalyst layer (b) at a loading of 2.5 to 3.5 mg, typically about 3 mg, of platinum and ruthenium per cm² of the anode layer active area. Generally, the atomic ratio of platinum to ruthenium in said anode electrocatalyst layer (b) is 40:60 to 70:30, such as about 50:50.

Conveniently, said first electrocatalyst composition comprises 45 to 80 wt%, such as 60 to 75 wt% of said nanoparticles comprising an alloy of platinum and ruthenium. Conveniently, said nanoparticles in said anode electrocatalyst layer (b) have a number average particle size of from 2 to 5 nm and said carbon substrate particles of said first electrocatalyst composition have a number average particle size of from 10 to 100 nm. In one embodiment, the carbon substrate particles of said first electrocatalyst composition are agglomerated into substantially spherical, mesoporous agglomerates having a weight average particle size of 1 to 10 microns.

Conveniently, said anode electrocatalyst layer (b) further comprises a proton-conducting polymer material, which is typically present in an amount such that the anode electrocatalyst layer (b) comprises 10 to 30 %, such as 15 to 25 %, generally about 20%, of the proton-conducting polymer material by weight of the anode electrocatalyst layer. A suitable proton-conducting polymer material for use in said anode electrocatalyst layer (b) comprises a poly[perfluorosulfonic] acid.

Conveniently, said anode electrocatalyst layer (b) has a thickness of 20 to 100 microns, for example 40 to 80 microns.

In one embodiment, said anode electrocatalyst layer (b) is applied directly on said one surface of the membrane by printing from an ink.

Said platinum is present in said cathode electrocatalyst layer (c) at a loading of 0.75 to 2.5 mg, for example 1 to 2 mg, such as about 1.5 mg, of platinum per cm² of the cathode layer.

Conveniently, said second electrocatalyst composition comprises 45 to 80 wt%, such as 60 to 75 wt% of said nanoparticles comprising platinum. Conveniently, said nanoparticles in said cathode electrocatalyst layer (c) have a number average particle size of from 2 to 5 nm and said carbon substrate particles of said second electrocatalyst composition have a number average particle size of from 10 to 100 nm. In one embodiment, the carbon substrate particles of said second electrocatalyst composition are agglomerated into substantially spherical, mesoporous agglomerates having a weight average particle size of 1 to 10 microns.

Conveniently, said cathode electrocatalyst layer (c) further comprises a proton-conducting polymer material, which is typically present in an amount such that the cathode electrocatalyst layer (c) comprises 10 to 20 %, generally 15%, of the proton-conducting polymer material by weight of the cathode electrocatalyst layer. A suitable proton-conducting polymer material for use in said cathode electrocatalyst layer (c) comprises a poly[perfluorosulfonic] acid.

Conveniently, said cathode electrocatalyst layer (c) has a thickness of 20 to 50 micron, for example 25 to 35 microns.

In one embodiment, said cathode electrocatalyst layer (c) is applied directly on said opposite surface of the membrane by printing from an ink.

Conveniently, said solid electrolyte polymer membrane (a) has a thickness of 20 to 175 microns, for example from 25 to 150 microns, such as from 50 to 125 microns. In one embodiment, said solid electrolyte polymer membrane (a) comprises a poly[perfluorosulfonic] acid.

Conveniently, said anode gas diffusion layer has an air permeability of at least 40 cm³/(s*cm²) and typically contains at least 5 wt.% PTFE.

Conveniently, said cathode gas diffusion layer has an air permeability of between 0.3 and 2.5 cm³/(s*cm²) and typically contains at least 5 wt.% PTFE.

In one embodiment, said cathode gas diffusion layer comprises a microporous layer disposed at the surface thereof remote from said cathode electrocatalyst layer, which microporous layer comprises at least 10 wt.%, and generally at least 20 wt%, PTFE.

In a further aspect, the invention resides in a membrane electrode assembly comprising:
(a) a solid electrolyte polymer membrane having a thickness of 20 to 175 microns;
(b) an anode electrocatalyst layer deposited on one surface of the membrane and having a thickness of 20 to 100 microns, the anode electrocatalyst layer comprising a first electrocatalyst composition comprising carbon substrate particles and 45 to 80 wt%, such as 60 to 75 wt%, of nanoparticles comprising an alloy of platinum and ruthenium disposed on the surface of the substrate particles, the anode layer comprising 2 to 5 mg of platinum and ruthenium per cm² of the anode layer active area;
(c) a cathode electrocatalyst layer deposited on an opposite surface of the membrane and having a thickness of 20 to 40 microns, the cathode electrocatalyst layer comprising a second electrocatalyst composition different from said first electrocatalyst composition and comprising carbon substrate particles and 45 to 80 wt%, such as 60 to 75 wt%, of nanoparticles comprising platinum disposed on the surface of the substrate particles, the cathode layer comprising 0.75 to 2.5 mg of platinum per cm² of the cathode layer active area;
(d) an anode gas diffusion layer disposed at the surface of said anode electrocatalyst layer remote from said membrane; and
(e) a cathode gas diffusion layer disposed at the surface of said cathode electrocatalyst layer remote from said membrane.

### BRIEF DESCRIPTION OF THE DRAWINGS

Figures 1 (a) and 1 (b) are scanning electron microscope (SEM) cross-sectional views of a conventional membrane electrode assembly (MEA) at different magnifications.

Figure 2 is SEM cross sectional view of a catalyst coated membrane according to one embodiment of the invention.

Figures 3 (a) and (b) are SEM cross sectional views of the anode electrocatalyst layer [Figure 3(a)] and the cathode electrocatalyst layer [Figure 3(b)] of the catalyst coated membrane according to another embodiment of the invention.

Figures 4 and 5 are polarization graphs for the MEAs of Comparative Examples 1 and 2, respectively, when tested in a direct methanol fuel cell at temperatures of 50°C, 60°C and 70°C.

Figure 6 shows polarization graphs for the MEA of Example 3 when tested in a direct methanol fuel cell at temperatures of 50°C, 60°C and 70°C.

Figure 7 is graph showing the variation of power density with PtRu anode catalyst loading in the MEAs of Examples 3 to 7 (using 60wt% PtRu on carbon black as anode electrocatalyst) when operating in a direct methanol fuel cell at an output voltage of 0.4V and at temperatures of 50°C, 60°C and 70°C.

Figures 8 is graph showing the variation of power density with PtRu anode catalyst loading in the MEAs of Examples 8 to 12 (using 75wt% PtRu on carbon black as anode electrocatalyst) when operating in a direct methanol fuel cell at an output voltage of 0.4V and at temperatures of 50°C, 60°C and 70°C.

Figure 9 is graph showing the variation of power density with anode Nafion loading in the MEAs of Examples 13 to 15 (using 60wt% PtRu on carbon black as anode electrocatalyst) when operating in a direct methanol fuel cell at an output voltage of 0.4V and at temperatures of 50°C, 60°C and 70°C.

Figure 10 is graph showing the variation of power density with cathode Nafion loading in the MEAs of Examples 16 to 18 (using 60wt% Pt on carbon black as cathode electrocatalyst) when operating in a direct methanol fuel cell at an output voltage of 0.4V and at temperatures of 50°C, 60°C and 70°C.

Figures 11 (a) to (c) are graphs showing the variation of Pt normalized power density with PtRu loading on the carbon black anode electrocatalyst used in the MEAs of Examples 1, 3, 9 and 19 to 21 when operating in a direct methanol fuel cell at output voltages of 0.4V, 0.45 and 0.5 V and at temperatures of 50°C [Figure 11 (a)], 60°C [Figure 11 (b)] and 70°C [Figure 11 (c)].

Figure 12 is a polarization graph for the MEA of Comparative Example 22 when tested in a direct methanol fuel cell at temperatures of 50°C, 60°C and 70°C.

Figure 13 is graph showing the variation of current density at 0.4V and peak power with gas diffusion layer composition in the MEAs of Comparative Examples 1 and 23 when operating in a direct methanol fuel cell at a temperature of 60°C with 1M methanol being supplied to the anode at a rate of either 1 ml/min or 2 ml/min without back pressure, and 100 sccm of dry air being supplied to the cathode also without back pressure.

Figure 14 are polarization graphs for the MEAs of Comparative Examples 1 and 23 when tested at 60°C in a direct methanol fuel cell with 1M methanol being supplied to the anode at a rate of either 1 ml/min or 2 ml/min without back pressure, and 100 sccm of dry air being supplied to the cathode also without back pressure.

Figure 15 are polarization graphs for the MEAs of Comparative Examples 1 and 23 when tested at 60°C in a direct methanol fuel cell with the supply of dry air to the cathode being varied between 100 and 300 sccm and the supply of 1M methanol to the anode being 1 ml/min.

Figure 16 is graph showing the variation of power density with anode gas diffusion layer composition in the MEAs of Examples 24 to 27 when operating in a direct methanol fuel cell at an output voltage of 0.4V and at temperatures of 50°C, 60°C and 70°C.

Figure 17 is graph showing the variation of power density with cathode gas diffusion layer composition in the MEAs of Examples 28 to 32 when operating in a direct methanol fuel cell at an output voltage of 0.4V and at temperatures of 50°C, 60°C and 70°C.

### DETAILED DESCRIPTION

The present invention is directed to a novel membrane electrode assembly (MEA) comprising a solid electrolyte polymer membrane sandwiched between an anode and a cathode. The anode comprises an anode electrocatalyst layer disposed on one major surface of the membrane and an anode gas diffusion layer disposed on the exposed surface of the anode electrocatalyst layer. The cathode comprises a cathode electrocatalyst layer disposed on the opposite major surface of the membrane and a cathode gas diffusion layer disposed on the exposed surface of the cathode electrocatalyst layer. The anode electrocatalyst layer comprises a first electrocatalyst composition comprising carbon substrate particles and nanoparticles comprising an alloy of platinum and ruthenium disposed on the surface of the substrate particles. The cathode electrocatalyst layer comprises a second electrocatalyst composition different from said first electrocatalyst composition and comprising carbon substrate particles and nanoparticles comprising platinum disposed on the surface of the substrate particles.

By virtue of the composition of the anode and cathode electrocatalyst layers and its novel construction described in detail below, the present MEA, when operating in a direct methanol fuel cell under conditions including a supply of 1M methanol to the anode electrocatalyst layer at a rate of 3 ml per minute, a supply of air to the cathode electrocatalyst layer at a rate 400 sccm, an output voltage of 0.4 volt and a temperature of 70°C, provides a power output in excess of 120 mW/cm² and a normalized performance in excess of 34 mW/mgPt: At the same methanol and air supply rates and an output voltage of 0.4 volt, the MEA typically provides a power output in excess of 105 mW/cm² and a normalized performance in excess of 30 mW/mgPt at a temperature of 60°C and a power output in excess of 90 mW/cm² and a normalized performance in excess of 27 mW/mgPt at a temperature of 50°C. At the same methanol and air supply rates but an output voltage of 0.45 volt, the MEA typically provides a power output in excess of 120 mW/cm² and a normalized performance in excess of 30 mW/mgPt at a temperature of 70°C, a power output in excess of 95 mW/cm² and a normalized performance in excess of 27 mW/mgPt at a temperature of 60°C and a power output in excess of 75 mW/cm² and a normalized performance in excess of 22 mW/mgPt at a temperature of 50°C. At the same methanol and air supply rates but an output voltage of 0.5 volt, the MEA typically provides a power output in excess of 80 mW/cm² and a normalized performance in excess of 23 mW/mgPt at a temperature of 70°C, a power output in excess of 65 mW/cm² and a normalized performance in excess of 19 mW/mgPt at a temperature of 60°C and a power output in excess of 45 mW/cm² and a normalized performance in excess of 14 mW/mgPt at a temperature of 50°C.

In this respect, it is to be understood that the term "normalized performance" of an MEA is intended to mean the power output from the MEA, when operating in a direct methanol fuel cell under the conditions specified, divided by the total weight of platinum in the anode and cathode electrocatalyst layers of the MEA.

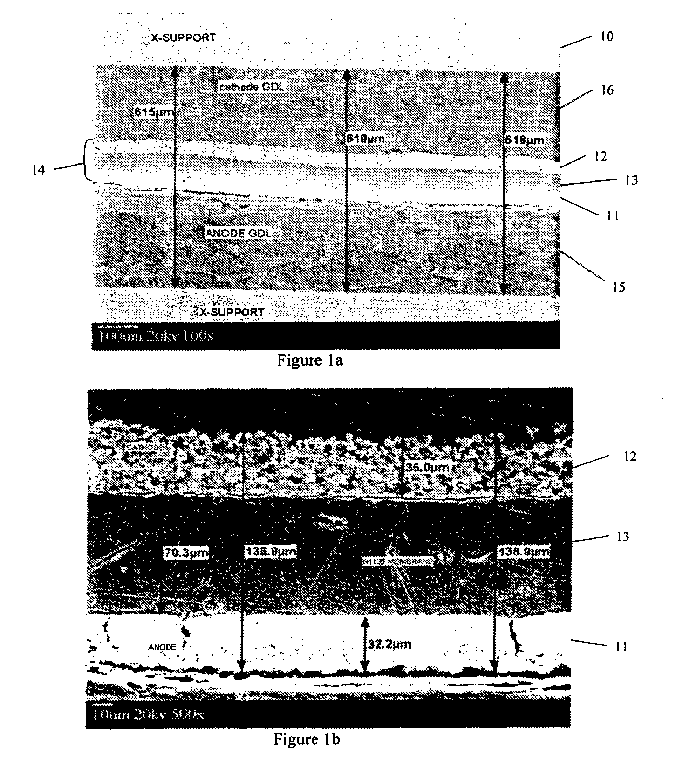

Referring to Figures 1 (a) and (b), which are SEM cross-sectional views of a conventional MEA at magnifications of 100X and 500X respectively, it will be seen that the MEA comprises anode and cathode electrocatalyst layers 11, 12 which are disposed on opposite major surfaces of a solid electrolyte polymer membrane 13 and which are of substantially the same thickness, but with the anode electrocatalyst layer 11 being marginally thinner than the cathode electrocatalyst layer 12. In particular, in the embodiment shown, the anode electrocatalyst layer 11 has an average thickness of 32 microns whereas the average thickness of the cathode electrocatalyst layer 12 is 35 microns. In addition, the solid electrolyte polymer membrane 13 in the embodiment shown has an average thickness of 70 micron so that the average thickness of the catalyst coated membrane (CCM) 14 defined by the membrane 13 and catalyst layers 11, 12 is 137 microns.

In the MEA shown in Figure 1, the CCM 14 is sandwiched between anode and cathode gas diffusion layers 15, 16 which are mounted in contact with the exposed surfaces of the anode and cathode electrocatalyst layers 11, 12 respectively. In the embodiment shown, the anode and cathode gas diffusion layers 15, 16 have a similar thickness of about 240 microns so that the overall thickness of the five layer MEA defined by the membrane 13, electrocatalyst layers 11, 12 and gas diffusion layers 15, 16 is about 620 micron.

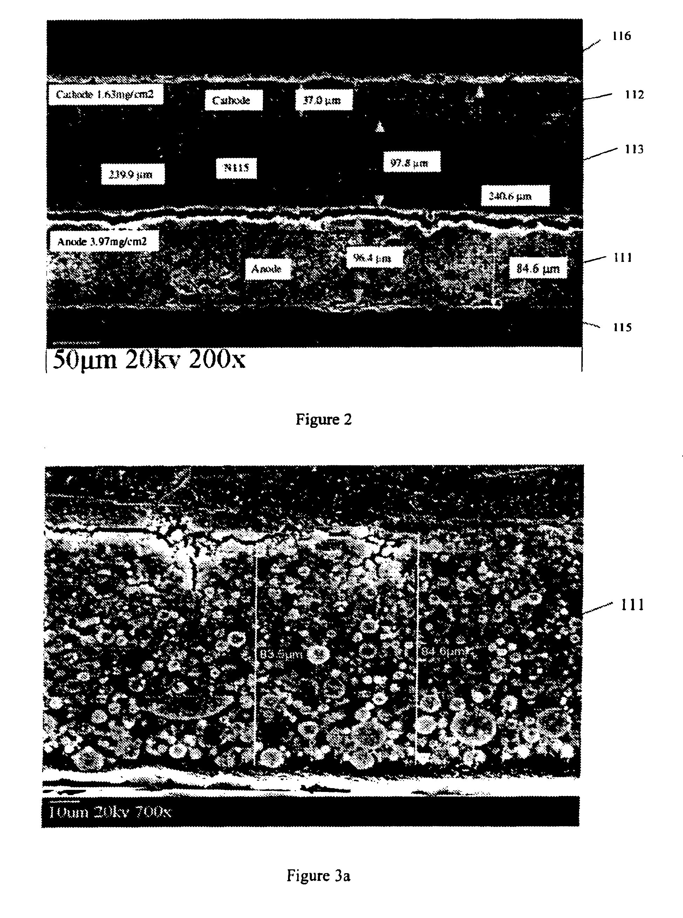

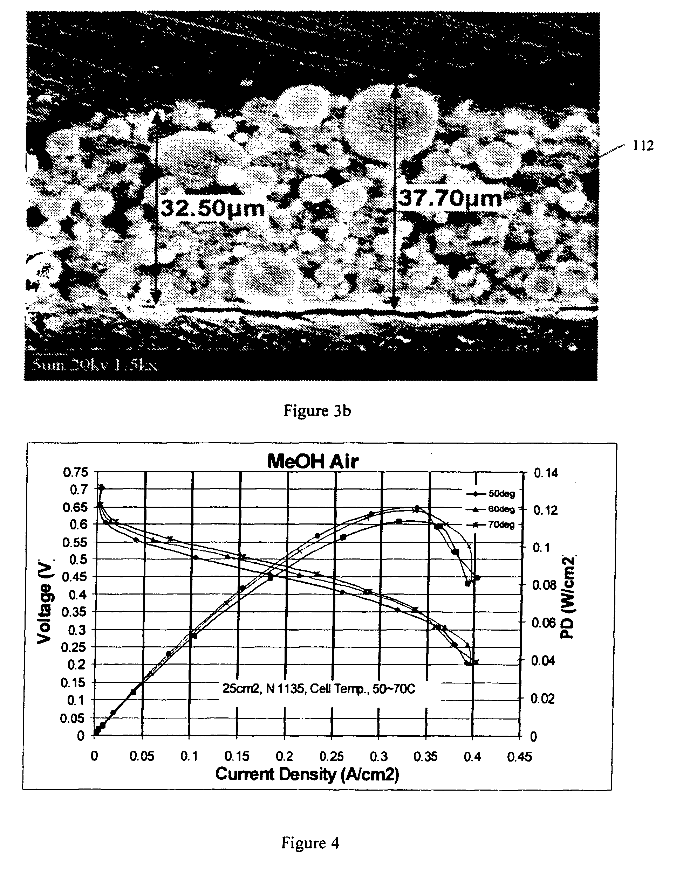

Referring to Figures 2, 3a and 3b, which are SEM cross-sectional views of a CCM (Figure 2), anode (Figure 3a) and cathode (Figure 3b) of an MEA according to two embodiments of the invention, it will be seen that the present MEA also comprises anode and cathode electrocatalyst layers 111, 112 which are disposed on opposite major surfaces of a solid electrolyte polymer membrane 113 and which are themselves sandwiched between anode and cathode gas diffusion layers 115, 116. However, in the present MEA, the anode electrocatalyst layer 111 typically has a thickness of 20 to 100 microns, for example 40 to 80 microns, whereas the cathode electrocatalyst layer 112 typically has a thickness of 20 to 50 microns, for example 25 to 35 microns, such that the ratio of the thickness of the anode electrocatalyst layer to the thickness of the cathode electrocatalyst layer is greater than 1:1, and generally greater than 1.5:1. In the embodiments shown, each anode electrocatalyst layer 111 has an average thickness of 83 to 90 microns, and each cathode electrocatalyst layer 112 has a thickness of 35 to 37 microns, such that the ratio of the anode electrocatalyst layer thickness to the cathode electrocatalyst layer thickness is about 2.5:1.

The construction, manufacture and operation of the present MEA will now be described in detail.

### The Electrocatalyst Layers

The electrocatalyst layers 111, 112 each comprise an electrocatalyst composition comprising carbon substrate particles and nanoparticles of a metal or metal alloy disposed on the surface of the substrate particles. In addition, each of the electrocatalyst layers 111, 112 further comprises a proton-conducting polymer material, such as poly[perfluorosulfonic] acid, a polysulfone, perfluorocarbonic acid, polyvinylidene fluoride (PVDF) or styrene-divinylbenzene sulfonic acid, with poly[perfluorosulfonic] acid being preferred. A particularly preferred PEM material is Nafion™ which comprises a base copolymer of tetrafluoroethylene and perfluorovinyl ether, on which sulfonate groups are present as ion-exchange groups. The proton conductivity of Nafion is about 0.1 S/cm at hydrated conditions. In the anode electrocatalyst layer 111, the proton-conducting polymer material is typically present in an amount from 10 to 30 wt%, such as 15 to 25 wt%, generally about 20 wt%, of the layer 111, whereas the proton-conducting polymer material in the cathode electrocatalyst layer 112 is typically present in an amount from 10 to 20 %, generally about 15%, of the layer 112.

In each electrocatalyst layer, the electrocatalyst composition typically comprises 45 to 80 wt%, such as 60 to 75 wt%, of the metal or metal alloy nanoparticles, with the nanoparticles having a number average particle size of from 2 to 5 nm, for example 2.5 to 4 nm, such as 2.5 to 3.5 nm, and the carbon substrate particles having a number average particle size of from 10 to 100 nm, for example 20 to 80 nm, such as 30 to 50 nm. In one embodiment, the carbon substrate particles of each electrocatalyst composition are agglomerated into substantially spherical, mesoporous agglomerates having a weight average particle size of 1 to 10 microns, for example 3 to 8 microns, such as 5 to 6 microns (see Figures 3a and 3b).

In the case of the anode electrocatalyst layer 111, the electrocatalyst composition comprises carbon substrate particles having nanoparticles comprising an alloy of platinum and ruthenium disposed on the surface of the carbon particles. Conveniently, the platinum-ruthenium alloy is present in the anode electrocatalyst layer 111 at a loading of 2 to 5 mg, for example 2.5 to 3.5 mg, typically about 3 mg, of platinum plus ruthenium per cm² of the anode layer. Generally, the atomic ratio of platinum to ruthenium in the anode electrocatalyst layer 111 is 40:60 to 70:30, such as about 50:50.

In the case of the cathode electrocatalyst layer 112, the electrocatalyst composition comprises carbon substrate particles having nanoparticles comprising platinum metal or metal oxide disposed on the surface of the carbon particles. Conveniently, the platinum is present in the cathode electrocatalyst layer 112 at a loading of 0.75 to 2.5 mg, for example 1 to 2 mg, such as about 1.5 mg, of platinum per cm² of the cathode layer.

Typically, the ratio of the weight of said alloy of platinum and ruthenium present in said anode electrocatalyst layer 111 to the weight of platinum present in said cathode electrocatalyst layer 112 is between about 1.5:1 and about 3:1, such as between about 2:1 and about 3: 1.

The electrocatalyst compositions used to fabricate the layers 111, 112 are produced by a spray conversion process. In this approach, precursor(s) to the final metal or alloy composition are dissolved in a liquid vehicle containing dispersed substrate particles. The liquid vehicle is then atomized to produce an aerosol comprising droplets dispersed and suspended in a carrier gas. The aerosol is then heated in order to: (1) remove at least a portion of the liquid vehicle in the droplets; and (2) convert the metal precursors to the corresponding metals and/or metal oxides. Typically these processes are accomplished in a single heating step by heating the aerosol to a reaction temperature of not greater than 700°C, such as not greater than 600°C (e.g., from 200°C to 500°C or from 300°C to 400°C) for a period of time of at least about 1 seconds, e.g., at least 3 second, at least about 20 seconds or at least about 100 seconds. Conveniently, the heating is conducted in a spray dryer, since spray dryers have the advantage of having high throughput, which allows large amounts of particles to be produced. More details of the spray conversion process can be found in, for example, in U.S. Patent No. 6,338,809, the entire contents of which are incorporated by reference herein.

The product of the spray conversion step comprises particles of the carbon substrate material, on which are dispersed nanoparticle domains comprising the desired electrocatalytic metal or metals. Depending on the temperature employed in the spray conversion step and the composition of the precursor medium, the dispersed nanoparticle domains may comprise the desired electrocatalytic metal or metals in oxide form, in elemental form or a mixture thereof. Moreover, in the case of the anode electrocatalyst composition, the dispersed nanoparticle domains may comprise platinum and ruthenium as a mixture of oxide or elemental species, or as an alloy of the elements. Normally, however, the anode electrocatalyst composition produced by the spray conversion step comprises platinum and ruthenium in unalloyed form and the product is subjected to post treatment in a reducing atmosphere to convert any oxide species to the elemental metal and to at least partially alloy the platinum and ruthenium metal species.

The post treatment of the anode electrocatalyst composition typically involves heating the particulate product of the spray conversion step to a temperature up to 500°C for a time of 0.5 hour to 10 hours, such as 1 hour to 8 hours, for example 1 hour to 4 hours in a reducing atmosphere, such as an atmosphere comprising hydrogen, more particularly a mixture of nitrogen and hydrogen, for example a mixture of nitrogen and hydrogen comprising up to 50 vol. %, such as up to 10 vol. %, hydrogen. In one embodiment, the post treatment may be conducted in two stages, namely a first low temperature stage at a temperature of up to 250°C, such as from 50°C to 250°C, such as 100°C to 150°C, and second higher temperature stage at a temperature of up to 500°C, such as from 150°C to 500°C. Further details of suitable post treatment of the anode electrocatalyst composition can be found in U.S. Patent Application Serial No. 11/685,446 filed March 13, 2007, the entire contents of which are incorporated herein by reference.

In the case of the cathode electrocatalyst composition, although there may be some surface oxide species present, the platinum is mainly present on the carbon substrate particles in metallic form and an additional heat treatment is therefore normally not required.

### Catalyst Coated Membrane

The cathode and anode electrocatalyst compositions produced by the method described above comprise electrically conductive carbon substrate particles on which are dispersed nanoparticles comprising Pt and PtRu alloy, respectively. Each electrocatalyst composition is then formed into an ink by dispersing the electrocatalyst composition and the desired amount of proton-conducting polymer material a liquid vehicle. The liquid vehicle is normally aqueous based, by which is meant that the vehicle typically comprises at least 50 weight % water. The aqueous vehicle can, however, also contain water miscible solvents, such as alcohols, to increase the viscosity of the ink and/or to provide additional properties, such as to act as a wetting agent. Examples of suitable alcohols include isopropanol and ethylene glycol. In some cases, organic solvent based systems can also be used.

The resultant inks are printed onto opposite sides respectively of the solid electrolyte polymer membrane 113 to form a catalyst coated membrane comprising a sandwich of the membrane 113 between the electrocatalyst layers 111,112. In one embodiment, the inks are printed on the membrane 113 using a direct-write deposition tool. As used herein, a direct-write deposition tool is a device that can deposit an electrocatalyst ink onto a surface by ejecting the composition through an orifice toward the surface without the tool being in direct contact with the surface. The direct-write deposition tool is preferably controllable over an x-y grid. Suitable direct-write deposition tools include an ultrasonic spray and an ink-jet device.

Typically, an ink-jet device includes an ink-jet head with one or more orifices having a diameter of not greater than about 100 µm, such as from 50 µm to 75 µm. Droplets are generated and are directed through the orifice toward the surface being printed. Ink-jet printers typically utilize a piezoelectric driven system to generate the droplets, although other variations are also used. Ink-jet devices are described in more detail in, for example, U.S. Patent Nos. 4,627,875 and 5,329,293 by Liker, each of which is incorporated herein by reference in its entirety. Ink-jet printing for the manufacture of DMFCs is disclosed in U.S. Patent Application Publication No. 20040038808, which is also incorporated herein by reference in its entirety.

The ink composition can also be deposited on the membrane 102 by a variety of other techniques including intaglio, roll printer, spraying, dip coating, spin coating and other techniques that direct discrete units, continuous jets or continuous sheets of fluid to a surface. Other printing methods include lithographic, gravure printing and decal transfer.

The solid electrolyte polymer membrane 113 is a proton conductive and electronically insulative ion exchange membrane that, when in the presence of water, selectively transports protons formed at the anode electrocatalyst layer 111 to the cathode electrocatalyst layer 112 where the protons react with oxygen to form water. Generally, the solid electrolyte polymer membrane is a solid, organic polymer, preferably, poly[perfluorosulfonic] acid, but may comprise polysulfones, perfluorocarbonic acid, polyvinylidene fluoride (PVDF) and styrene-divinylbenzene sulfonic acid. A particularly preferred PEM material is Nafion™, which comprises a base copolymer of tetrafluoroethylene and perfluorovinyl ether, on which sulfonate groups are present as ion-exchange groups. An alternative substrate for use as the membrane 113 is polybenzimidazole (PBI), to which ion exchange groups such as phosphoric acid groups can be added. Another suitable substrate for use as the membrane 113 is a hydrocarbon membrane which does not have fluorine in its structure.

Conveniently, solid electrolyte polymer membrane 113 has a thickness of 20 to 175 microns, for example from 25 to 150 microns, such as from 50 to 125 microns.

### Membrane Electrode Assembly

In addition to the catalyst coated membrane (CCM) described above, the present membrane electrode assembly (MEA) comprises an anode gas diffusion layer 115 disposed on the exposed surface of the anode electrocatalyst layer 111 and a cathode gas diffusion layer 116 disposed on the exposed surface of the cathode electrocatalyst layer 112. Each of the gas diffusion layers 115, 116 is formed of a porous material that is resistant to corrosion in an acid environment, offers good electrical conductivity and allows fast permeation of oxygen (cathode) and hydrogen (anode). Carbon is a preferred material for the gas diffusion layers 115, 116, and suitable versions of carbon include, but are not necessarily limited to, graphite, carbon fiber, carbon paper and carbon cloth. Typical materials for the gas diffusion layers are partially or fully "graphitized" carbon fiber-based nonwoven materials, either papers or felts, preferably papers, specially designed to transport gases or liquid into and excess liquid product water or gas product carbon dioxide out of the electrocatalyst layers of direct methanol fuel cells or proton exchange membrane fuel cells. Examples of such materials are the SIGRACET GDL 20/21, 30/31, 24/25, and 34/35 series gas diffusion layers supplied by SGL Carbon.

Conveniently, the anode gas diffusion layer 115 has air permeability of at least 40 cm³/(s*cm²) and typically contains at least 5 wt.% PTFE. Conveniently, the cathode gas diffusion layer 116 has air permeability between 0.3 and 2.5 cm³/(s*cm²) and typically contains at least 5 wt.% PTFE. In one embodiment, the cathode gas diffusion layer 116, but not the anode gas diffusion layer 115, comprises a microporous layer comprising a mixture of carbon and PTFE comprising at least 20 wt.% PTFE.

To produce the final MEA, the gas diffusion layers 115, 116 are assembled on opposite sides respectively of the CCM and the resultant assembly is hot pressed between platens at a temperature of 120°C to 140°C and a pressure of 10 kg/cm² to 30 kg/cm² for 5 to 10 minutes. When hot pressing is complete, the pressure is reduced to 2 kg/cm² to 4 kg/cm² while the MEA is allowed to cool to room temperature.

In one embodiment, each of the gas diffusion layers 115, 116 is provided with a Nafion™-containing top coat on its surface remote from the respective electrocatalyst layer 111, 112 in the final MEA. The top coat is applied prior to lamination with the CCM by printing onto the layer 115, 116 an ink comprising a mixture of iso-propanol (IPA) and Nafion™. Typically the Nafion™ is provided as 5 wt% aqueous solution and the ink for top-coating GDL is a mixed with the IPA in a weight ratio of IPA:5% Nafion™ solution of 1:1 to 5:1, such as about 2:1 by weight. For the anode gas diffusion layer 115, the Nafion loading in the top coat is about 0.2 mg Nafion™/cm² of the layer 115, whereas for the cathode gas diffusion layer 116, the Nafion™ loading is 0.1 to 0.2 mg Nafion™/cm² of the layer 116.

The invention will now be more particularly described with reference to the following Examples and the accompanying drawings.

### Example 1 (Comparative)

An MEA is produced comprising a SIGRACET 30 BA carbon paper anode diffusion layer and an anode electrocatalyst layer comprising 50:50 atomic ratio PtRu blacks at 6 mgPtRu/cm² loading deposited on one side of a Nafion1135 membrane having a thickness of approximately 90 microns. The cathode electrocatalyst layer is deposited on the opposite side of the membrane and is composed of 60 wt.% Pt/Ketjen black at a loading of 1.5 mgPt/cm². SIGRACET 21 BC carbon paper is used as the cathode gas diffusion layer.

The anode electrocatalyst is an un-supported PtRu (atomic ratio 1: 1) black commercially available from Johnson Matthey as HiSPEC® 6000. The anode electrocatalyst is formed into an anode ink by mixing 1g PtRu black catalyst with 8g deionized water and 3.529g 5wt.% Nafion solution. The anode ink is then applied to on one side of a Nafion 1135 membrane to produce the anode electrocatalyst layer, which has a Nafion content of 15 wt.%.

The cathode electrocatalyst is made by combining 600 g of tetra amine Pt hydroxide solution (14.98 wt% in Pt) with 853 g Ketjen black suspension (7.03 wt% in carbon) and 2295g water and shearing the combined mixture for 15-20 minutes until intimately mixed. The mixture is then pumped to an atomization unit to form droplets and the droplets are entrained in a gas stream and sprayed into spray conversion equipment such as a spray dryer. Transmission Electron Microscopy (TEM) of the powder after spray drying shows uniform distribution of nanoparticles in the size range of 2-3 nm on agglomerated Ketjen black particles. Chemical analysis of the resultant product shows it to contain about 60wt% platinum.

The CATHODE electrocatalyst is then formed into an anode ink by mixing 1g Pt/C black catalyst with 8g deionized water and 3.529g 5wt.% Nafion solution. The anode ink is then applied to on the other side of the Nafion 1135 membrane to produce the cathode electrocatalyst layer, which also has a Nafion content of 15 wt.%.

The resultant CCM is sandwiched between anode and cathode gas diffusion layers supplied by SGL Carbon to produce a 5 layer MEA, which is then hot pressed at 135°C and 18 kg/cm² for 10 minutes. The pressure is then reduced to 2.7 kg/cm² and maintained at this value for 5-10 minutes until get the MEA cools to near room temperature.

The resultant MEA has an active area of 25 cm² and is tested in a direct methanol fuel cell, with 1M methanol being supplied to the anode at a rate of 3 ml/min without back pressure, and 400 sccm of dry air being supplied to the cathode also without back pressure. The polarization of the fuel cell at temperatures of 50°C, 60°C and 70°C is shown in Figure 4, from which it will be seen that that at an output voltage of 0.4V the cell produces an absolute power output of about 105mW/cm² at 50°C, of 116 W/cm² at 60°C and about 118 mW/cm² at 70°C.

### Example 2 (Comparative)

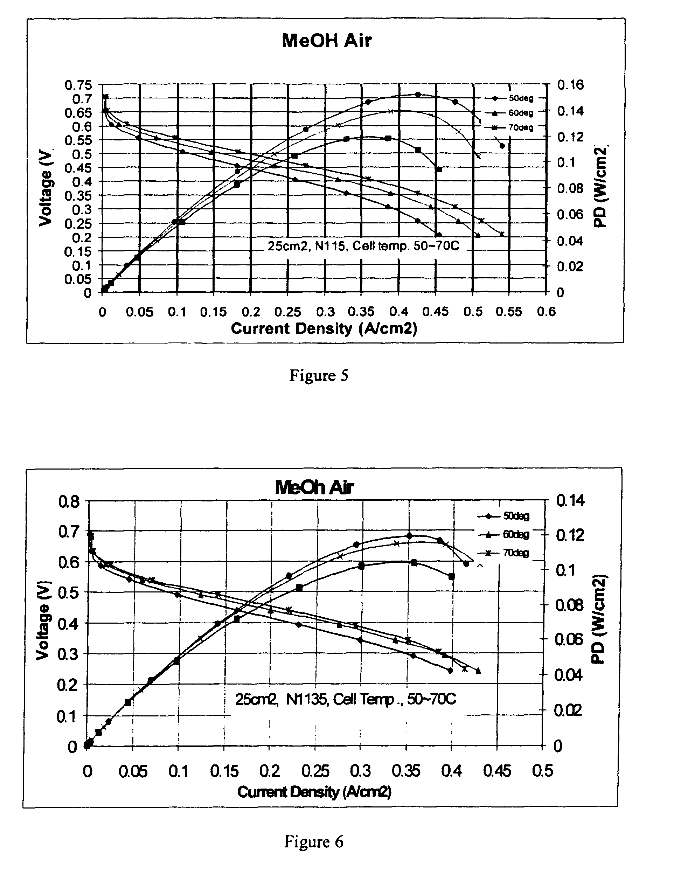

Example 1 is repeated but with the Nafion 1135 layer being replaced by a Nafion 115 layer having a thickness of 90 micron. The resultant MEA is tested in a direct methanol fuel cell in the same way as in Example 1 and the polarization of the fuel cell at temperatures of 50°C, 60°C and 70°C is shown in Figure 5. It will be seen that that at an output voltage of 0.4V the cell produces an absolute energy output of about 105mW/cm² at 50°C, of about 131 W/cm² at 60°C and about 146 mW/cm² at 70°C.

### Example 3

Example 1 is repeated but with the anode layer being produced from a supported 60 wt.%Pt₅₀Ru₅₀/C catalyst and with 20 wt.% Nafion in the resulting anode layer. The 60 wt%Pt₅₀Ru₅₀/C catalyst was produced by mixing 39.1 g of tetra amine Pt nitrate salt (50.48wt% in Pt) and 94.6 g Ru nitrosylnitrate solution (10.83 wt% in Ru) with 284.5 g Ketjen black suspension (7.03 wt% in carbon) and 832 g water. All reagents are used as directly supplied from vendors. The combined mixture is sheared for 15-20 minutes until the components are intimately mixed. The feed is then pumped to an atomization unit to form droplets and the droplets are entrained in a gas stream and sprayed into spray conversion equipment such as a spray dryer. The spray dryer is operated with an inlet temperature of 575°C and an outlet temperature of 320°C. The powder was further post processed in reducing environment.

Transmission Electron Microscopy (TEM) of the powder after spray drying shows uniform distribution of nanoparticles in the size range of 2-3 nm on agglomerated Ketjen black particles. Chemical, analysis of the resultant product shows it to contain about 40wt% platinum and about 20 wt% ruthenium.

The resultant electrocatalyst is used to produce an anode ink in the same way as Example 1 and the resultant ink is used to print the anode of a catalyst coated membrane (CCM) on a Nafion 1135 layer having a 60% Pt/C cathode layer (Pt loading 1.5 mg/cm² of the cathode) such that the anode PtRu/C metal loading is 3 mg/cm².

The resultant MEA is tested in a direct methanol fuel cell in the same way as in Example 1 and the polarization of the fuel cell at temperatures of 50°C, 60°C and 70°C is shown in Figure 6. Comparing the data in Figure 4 with those in Figure 6, it will be seen that, although the total Pt loading decreased almost 100 % from 5.5 mg/cm² in Example 1 to 3.5 mg/cm² in Example 3, the cell performance only decreased from about 105 mW/cm² at 50°C and 0.4V in Example 1 to about 90 mW/cm² in Example 3 (a reduction of only about 17%), and from about 118 mW/cm² at 70°C and 0.4V to about 114 mW/cm² (a reduction of only about 3:5%).

### Examples 4 to 7

Example 3 is repeated but with the anode loading being 4 mg of PtRu/cm² of the anode in Example 4, 5 mg of PtRu/cm² of the anode in Examples 5 and 6 mg of PtRu/cm² of the anode in Example 6. In Example 7, Example 3 was again repeated with the anode loading being 5 mg of PtRu/cm² of the anode and with the Nafion content of the anode being reduced to 15% by weight of the anode electrocatalyst layer.

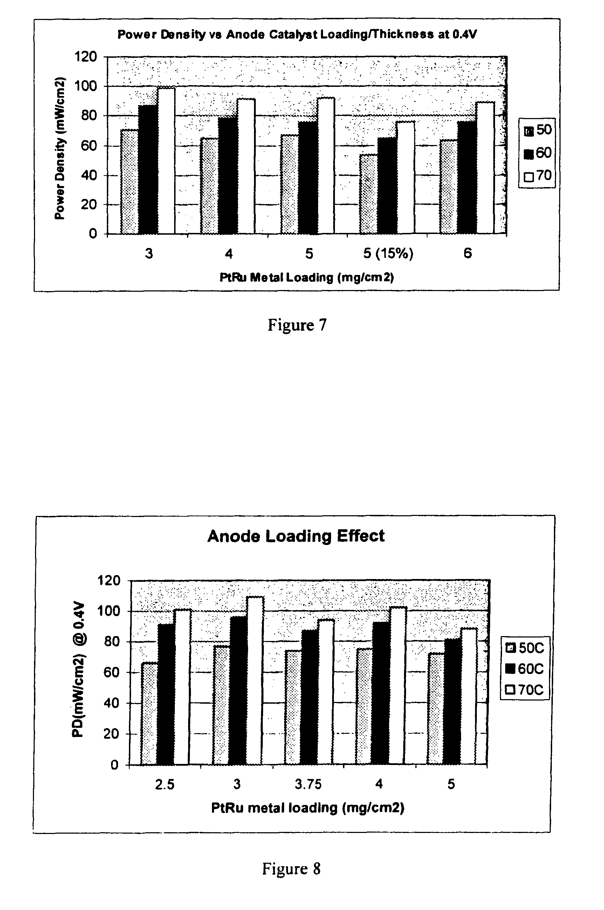

The resultant MEAs and the MEA of Example 3 are separately tested in direct methanol fuel cells in the same way as in Example 1 and the power density of the cells at an output voltage of 0.4V and at temperatures of 50°C, 60°C and 70°C is shown in Figure 7. It will be seen from Figure 7 that the MEA of Example 3 with the 3 mg/cm² PtRu anode loading produced the highest DMFC performance.

### Examples 8 to 12

A supported 75%Pt₅₀Ru₅₀/C catalyst is produced by mixing 48.9 g of tetra amine Pt nitrate salt (50.48wt% in Pt) and 118 g Ru nitrosylnitrate solution (10.83 wt% in Ru) with 178 g Ketjen black suspension (7.03 wt% in carbon) and905 g water. All reagents are used as directly supplied from vendors. The combined mixture is sheared for 15-20 minutes until the components are intimately mixed. The feed is then pumped to an atomization unit to form droplets and the droplets are entrained in a gas stream and sprayed into spray conversion equipment such as a spray dryer. The spray dryer is operated with an inlet temperature of 575°C and an outlet temperature of 320°C. The resultant powder is further post processed in a reducing environment.

Transmission Electron Microscopy (TEM) of the powder after spray drying shows uniform distribution of nanoparticles in the size range of 3 to 6 nm on agglomerated Ketjen black particles. Chemical analysis of the resultant product shows it to contain about 50wt% platinum and about 25 wt% ruthenium.

MEAs are produced from the resultant electrocatalyst by the method of Example 3 with the anode loading being 2.5 mg of PtRu/cm² of the anode in Example 8, 3 mg of PtRu/cm² of the anode in Example 9, 3.75 mg of PtRu/cm² of the anode in Example 10, 4 mg of PtRu/cm² of the anode in Example 11 and 5 mg of PtRu/cm² of the anode in Example 12.

The resultant MEAs are separately tested in direct methanol fuel cells in the same way as in Example 1 and the power density of the cells at an output voltage of 0.4V and at temperatures of 50°C, 60°C and 70°C is shown in Figure 8. In general, it will be seen that the MEA of Example 9 with the 3 mg/cm² PtRu anode loading produced the highest DMFC performance.

### Examples 13 to 15

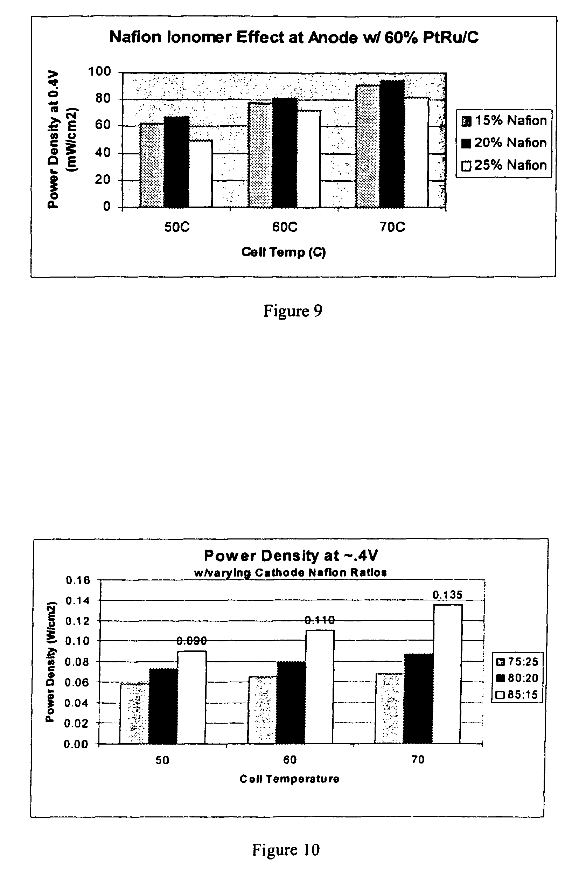

Example 3 is repeated to produce three additional MEAs in which the anode electrocatalyst layer comprises 60%Pt₅₀Ru₅₀/C catalyst at a loading of 3 mg of PtRu/cm² of the anode and in which the anode Nafion content is 15 wt% (Example 13), 20 wt% (Example 14) and 25 wt% (Example 15) respectively. The resultant MEAs are separately tested in direct methanol fuel cells in the same way as in Example 1 and the power density of the cells at an output voltage of 0.4V and at temperatures of 50°C, 60°C and 70°C is shown in Figure 9. It will be seen that the MEA with 20wt% Nafion (Example 14) in the anode produces the highest DMFC performance.

### Examples 16 to 18

Example 3 is repeated to produce three further MEAs in which the cathode electrocatalyst layer comprises 60%Pt/C catalyst at a loading of 1.5 mg of Pt/cm² of the cathode and in which the cathode Nafion content is 15 wt% (Example 16), 20 wt% (Example 17) and 25 wt% (Example 18) respectively. The resultant MEAs are separately tested in direct methanol fuel cells in the same way as in Example 1 and the power density of the cells at an output voltage of 0.4V and at temperatures of 50°C, 60°C and 70°C is shown in Figure 10. It will be seen that the MEA with 15wt% Nafion (Example 14) in the cathode produces the highest DMFC performance.

### Examples 19 to 21

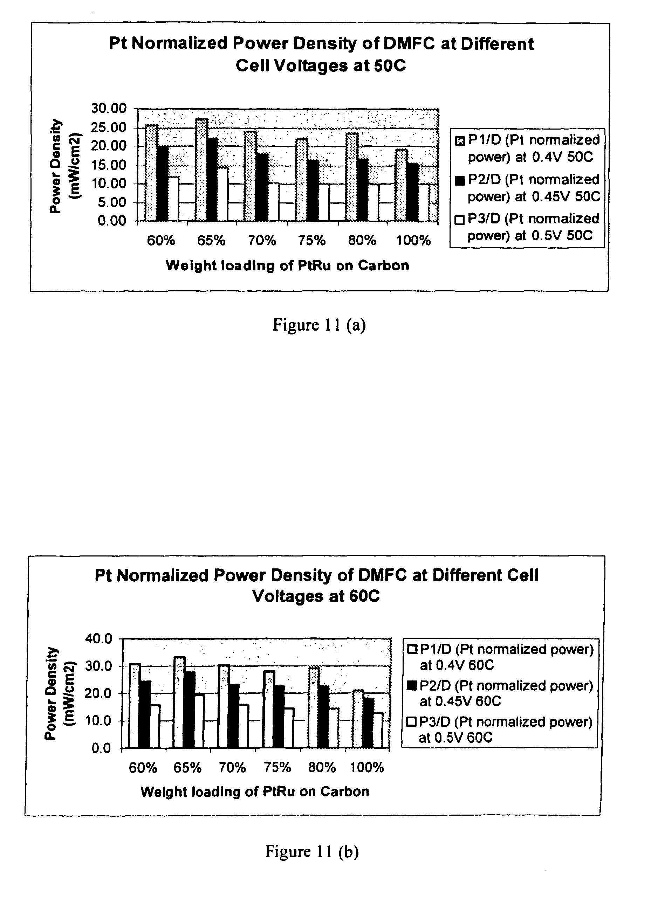

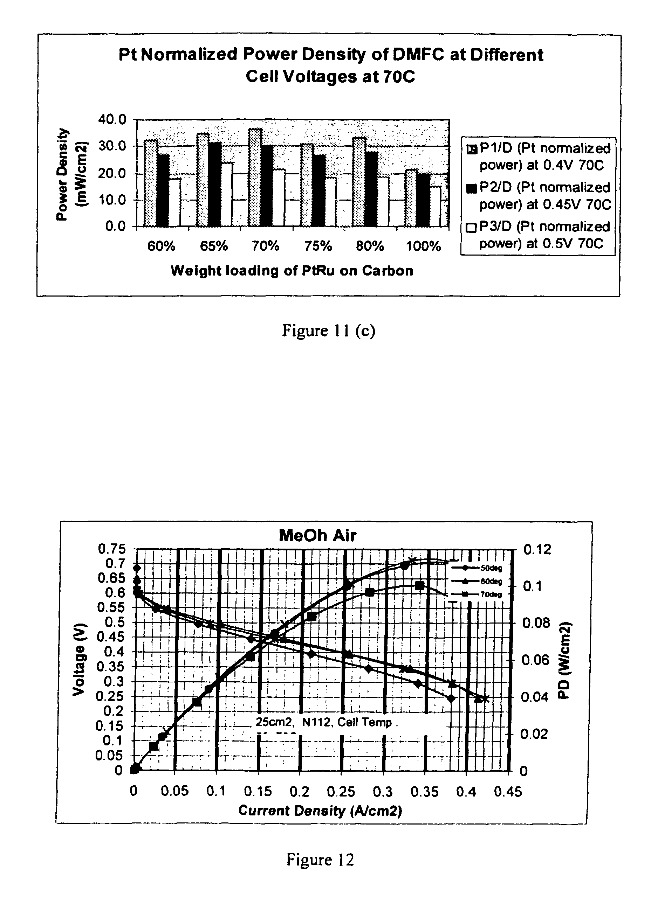

Example 3 is repeated to produce three further MEAs in which the anode electrocatalyst layer comprises 65wt%Pt₅₀Ru₅₀/C (Example 19), 70wt% Pt₅₀Ru₅₀/C (Example 20) and 80wt% Pt₅₀Ru₅₀/C (Example 21), all at a PtRu loading of 3 mg/cm² of the anode and at a Nafion anode loading of 20 wt%. The resultant MEAs, together with the MEAs of Examples 1, 3 and 9, are separately tested in direct methanol fuel cells in the same way as in Example 1 and the Pt normalized power density of the cells at various output voltage between 0.4 and 0.5 V and at 50°C is shown in Figure 11 (a) and Table 1. The Pt normalized power density of the cells over the same range of output voltages at 60°C is shown in Figure 11 (b) and Table 2, whereas the Pt normalized power density of the cells over the same range of output voltages at 70°C is shown in Figure 11 (c) and Table 3.

**Table 1**

| | | **case 1** | **case 2** | **case 3** | **case 4** | **case 5** | **case 6** |
|---|---|---|---|---|---|---|---|
| **Anode** | catalyst supporting ratio | 60% | 65% | 70% | 75% | 80% | 100% |
| | PtRu catalyst loading (mg/cm2) | 3 | 3 | 3 | 3 | 3 | 6 |
| | A=Pt loading (mg Pt/cm2) | 2 | 2 | 2 | 2 | 2 | 4 |
| | B=Anode polarization at 0.4V 60C (mA/cm2) | 250 | 250 | 210 | 200 | 190 | 300 |
| | **B/A (Pt norma)ized anode)** | 125 | 125 | 105 | 100 | 95 | 75 |
| **Cathode** | catalyst supporting ratio | 60% | 60% | 60% | 60% | 60% | 60% |
| | C=Pt loading (mg/cm2) | 1.5 | 1.5 | 1.5 | 1.5 | 1.5 | 1.5 |
| **Cell** | D=A+C (total Pt loading, mg/cm2) | 3.5 | 3.5 | 3.5 | 3.5 | 3.5 | 5.5 |
| | P1=DMFC Power Density at 0.4V at 50C | 90 | 96 | 84 | 77 | 82 | 105 |
| | P2=DMFC Power Density at 0.45Vat 50C | 70 | 77 | 63 | 57.2 | 58.5 | 85.5 |
| | P3=DMFC Power Density at 0.5V at 50C | 41.5 | 50 | 36 | 35 | 35 | 55 |
| | **P1/D (Pt normalized power) at 0.4V 50C** | 25.71 | 27.43 | 24.00 | 22.00 | 23.43 | 19.09 |
| | **P2/D (Pt normalized power) at 0.45V 50C** | 20.00 | 22.00 | 18.00 | 16.34 | 16.71 | 15.55 |
| | **P3/D (Pt normalized power) at 0.5V 50C** | 11.86 | 14.29 | 10.29 | 10.00 | 10.00 | 10.00 |

**Table 2**

| | | **case 1** | **case 2** | **case 3** | **case 4** | **case 5** | **case 6** |
|---|---|---|---|---|---|---|---|
| **Anode** | catalyst supporting ratio | 60% | 65% | 70% | 75% | 60% | 100% |
| | PtRu catalyst loading (mg/cm2) | 3 | 3 | 3 | 3 | 3 | 6 |
| | A=Pt loading (mg Pt/cm2) | 2 | 2 | 2 | 2 | 2 | 4 |
| | B=Anode polarization at 0.4V 60C (mA/cm2) | 250 | 250 | 210 | 200 | 190 | 300 |
| | **B/A (Pt normalized anode)** | 125 | 125 | 105 | 100 | 95 | 75 |
| **Cathode** | catalyst supporting ratio | 60% | 60% | 60% | 60% | 60% | 60% |
| | C=Pt loading (mg/cm2) | 1.5 | 1.5 | 1.5 | 1.5 | 1.5 | 1.5 |
| **Cell** | D=A+C (total Pt loading, mg/cm2) | 3.5 | 3.5 | 3.5 | 3.5 | 3.5 | 5.5 |
| | P1=DMFC Power Density at 0.4V at 60C | 108 | 116 | 106 | 98 | 102 | 116 |
| | P2=DMFC Power Density at 0.45V at 60C | 85.5 | 97 | 81 | 79 | 79 | 99 |
| | P3=DMFC Power Density at 0.5V at 60C | 55 | 67.5 | 55 | 50 | 50 | 70 |
| | **P1/D (Pt normalized power) at 0.4V 60C** | 30.9 | 33.1 | 30.3 | 28.0 | 29.1 | 21.1 |
| | **P2/D (Pt normalized power) at 0.45V 60C** | 24.4 | 27.7 | 23.1 | 22.6 | 22.6 | 18.0 |
| | **P3/D (Pt normalized power) at 0.5V 60C** | 15.7 | 19.3 | 15.7 | 14.3 | 14.3 | 12.7 |

**Table 3**

| | | **case 1** | **case 2** | **case 3** | **case 4** | **case 5** | **case 6** |
|---|---|---|---|---|---|---|---|
| **Anode** | catalyst supporting ratio | 60% | 65% | 70% | 75% | 80% | 100% |
| | PtRu catalyst loading (mg/cm2) | 3 | 3 | 3 | 3 | 3 | 6 |
| | A=Pt loading (mg Pt/cm2) | 2 | 2 | 2 | 2 | 2 | 4 |
| | B=Anode polanzation at 0 4V 60C (mA/cm2) | 250 | 250 | 210 | 200 | 190 | 300 |
| | **B/A (Pt normalized anode)** | 125 | 125 | 105 | 100 | 95 | 75 |
| **Cathode** | catalyst supporting ratio | 60% | 60% | 60% | 60% | 60% | 60% |
| | C=Pt loading (mg/cm2) | 15 | 15 | 1 5 | 1 5 | 1 5 | 1.5 |
| **Cell** | D=A+C (total Pt loading, mg/cm2) | 3 5 | 3 5 | 3 5 | 3 5 | 3 5 | 5 5 |
| | P1=DMFC Power Density at 0 4V at 70C | 114 | 122 | 128 | 108 | 116 | 118 |
| | P2=DMFC Power Density at 0.45V at 70C | 94 5 | 110 | 106 | 93 | 97 | 108 |
| | P3=DMFC Power Density at 0 5V at 70C | 62.5 | 82 5 | 75 | 64 | 65 | 82 5 |
| | **P1/D (Pt normalized power) at 0.4V 70C** | 32 6 | 34 9 | 36.6 | 30 9 | 33 1 | 21 5 |
| | **N2/D (Pt normalized power) at 0.45V 70C** | 27.0 | 31 4 | 30.3 | 26.6 | 27.7 | 196 |
| | **P3/D (Pt normalized power) at 0.5V 70C** | 17 9 | 23.6 | 21 4 | 18.3 | 186 | 150 |

### Example 22

Example 1 is repeated but with the Nafion 1135 layer being replaced by a Nafion 112 layer having a thickness of 50 micron. The resultant MEA is tested in a direct methanol fuel cell in the same way as in Example 1 and the polarization of the fuel cell at temperatures of 50°C, 60°C and 70°C is shown in Figure 12.

### Example 23

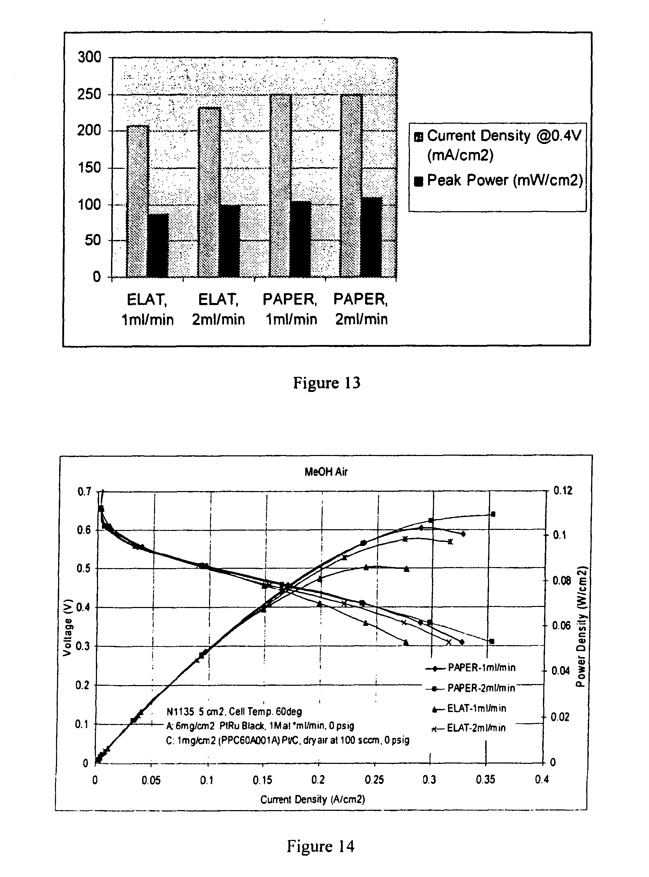

Example 1 is repeated but with the anode gas diffusion layer being ELAT single-sided carbon cloth and the cathode gas diffusion layer being ELAT double-sided carbon cloth, both as supplied by E-TEK. The resultant MEA and the MEA of Example 1 are tested in a direct methanol fuel cell with 1 M methanol being supplied to the anode at a rate of either 1 ml/min or 2 ml/min without back pressure, and 100 sccm of dry air being supplied to the cathode also without back pressure. Figure 13 shows a comparison of DMFC performance (current density at 0.4V and peak power density) for the carbon paper based MEA of Example 1 against the carbon cloth based MEA of Example 1 at 60°C. The fuel cell polarization curves for both MEAs under the same conditions are shown in Figure 14. It will be seen that the carbon paper based MEA shows better performance than that using carbon cloth as the gas diffusion layers.

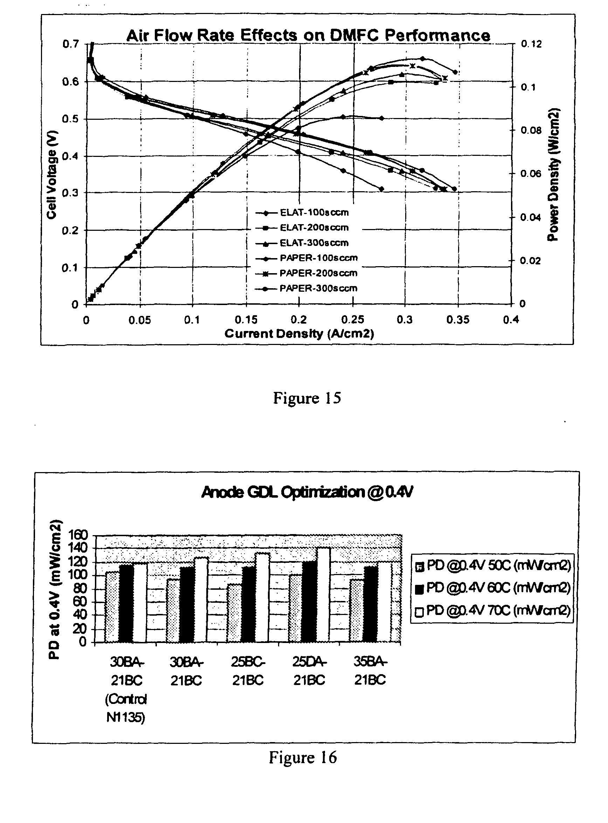

Figure 15 shows the fuel cell polarization curves at 60°C for the MEAs of Examples 1 and 23 when the supply of dry air to the cathode is varied between 100 and 300 sccm and the supply of 1M methanol to the anode is 1 ml/min. It will be seen that the carbon paper based MEA shows less air flow rate dependence than that using carbon cloth as the gas diffusion layers.

### Examples 24 to 27

Example 1 is repeated with the cathode gas diffusion layer being SIGRACET 21BC carbon paper but with the anode gas diffusion layer being varied between the SIGRACET materials shown in Table 4.

**Table 4**

| Example | GDL Type | GDL thickness µm | GDL area wt g/cm³ | Air permeability cm³/s/cm² | PTFE wt% | MPL Layer |
|---|---|---|---|---|---|---|
| 24 | 25BC | 235 | 86 | 0.8 | 5 | Yes |
| 25 | 25DA | 223 | 44 | 181.6 | 20 | No |
| 26 | 30BA | 310 | 95 | 40 | 5 | No |
| 27 | 35BA | 300 | 54 | 70 | 5 | No |

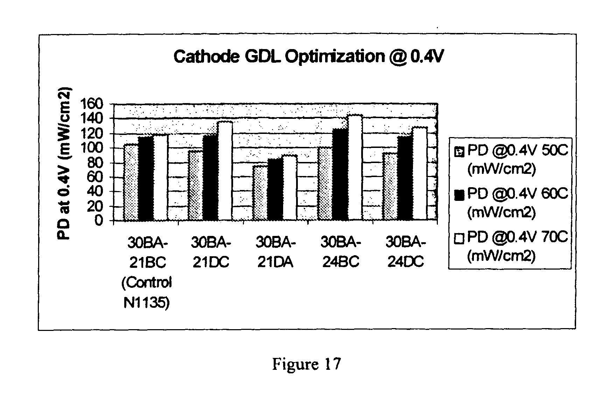

The resultant MEAs are separately tested in direct methanol fuel cells ' in the same way as in Example 1 and the power density of the cells at an output voltage of 0.4V and at temperatures of 50°C, 60°C and 70°C is shown in Figure 17. It will be seen that the MEAs employing anode gas diffusion layers having an air permeability of at least 40 cm³/s/cm² and containing at least 5 wt.% PTFE produce the highest DMFC performance.

### Examples 28 to 32

Example 1 is repeated but with the anode gas diffusion layer being SIGRACET 30BA carbon paper and the anode gas diffusion layer being varied between the SIGRACETmaterials shown in Table 5.

**Table 5**

| Example | GDL Type | GDL thickness µm | GDL area wt g/cm³ | Air permeability cm³/s/cm² | PTFE wt% | MPL Layer |
|---|---|---|---|---|---|---|
| 28 | 21BC | 260 | 95 | 2.35 | 5 | Yes |
| 29 | 21DA | 233 | 46 | 226.1 | 20 | No |
| 30 | 21DC | 236 | 95.2 | 2.1 | 20 | Yes |
| 31 | 24BC | 235 | 100 | 0.45 | 5 | Yes |
| 32 | 24DC | 242 | 112.8 | 0.5 | 20 | Yes |

The resultant MEAs are separately tested in direct methanol fuel cells in the same way as in Example 1 and the power density of the cells at an output voltage of 0.4V and at temperatures of 50°C, 60°C and 70°C is shown in Figure 17. It will be seen that the MEAs employing cathode gas diffusion layers having an air permeability between about 0.3 and 2.5 cm³/(s*cm²) and containing at least 5 wt.%PTFE produce the highest DMFC performance.

## Claims

1. A DMFC membrane electrode assembly comprising:
(a) a solid electrolyte polymer membrane;
(b) an anode electrocatalyst layer disposed at one surface of the membrane and comprising a first electrocatalyst composition comprising carbon substrate particles and nanoparticles comprising an alloy of platinum and ruthenium disposed on the surface of the substrate particles;
(c) a cathode electrocatalyst layer disposed at an opposite surface of the membrane, the cathode layer comprising a second electrocatalyst composition different from said first electrocatalyst composition and comprising carbon substrate particles and nanoparticles comprising platinum disposed on the surface of the substrate particles;
(d) an anode gas diffusion layer disposed at the surface of said anode electrocatalyst layer remote from said membrane; and
(e) a cathode gas diffusion layer disposed at the surface of said cathode electrocatalyst layer remote from said membrane,
wherein said alloy of platinum and ruthenium is present in said anode electrocatalyst layer (b) at a loading of 2.5 to 3.5 mg per cm² of the anode layer active area, said platinum is present in said cathode electrocatalyst layer (c) at a loading of 0.75 to 2.5 mg per cm² of the cathode layer active area,
**characterized in that** the ratio of the weight per cm² of active area of said alloy of platinum and ruthenium present in said anode electrocatalyst layer (b) to the weight per cm² of active area of platinum present in said cathode electrocatalyst layer (c) is between 1.5:1 and 3:1.

2. The membrane electrode assembly of claim 1 wherein said alloy of platinum and ruthenium is present in said anode electrocatalyst layer (b) at a loading of 3 mg, of platinum and ruthenium per cm² of the anode layer active area.

3. The membrane electrode assembly of claim 1 or claim 2 wherein said first electrocatalyst composition comprises 45 to 80 wt%, or 60 to 75 wt%, of said nanoparticles comprising an alloy of platinum and ruthenium.

4. The membrane electrode assembly of any preceding claim wherein said anode electrocatalyst layer (b) has a thickness of 20 to 100 microns, or 40 to 80 microns.

5. The membrane electrode assembly of any preceding claim wherein said platinum is present in said cathode electrocatalyst layer (c) at a loading of 1 to 2 mg, or 1.5 mg, of platinum per cm² of the cathode layer active area.

6. The membrane electrode assembly of any preceding claim wherein said second electrocatalyst composition comprises 45 to 80 wt%, or 60 to 75, wt% of said nanoparticles comprising platinum.

7. The membrane electrode assembly of any preceding claim wherein said cathode electrocatalyst layer (c) has a thickness of 20 to 50 microns, or 25 to 35 microns.

8. The membrane electrode assembly of claim 1, wherein:
the solid electrolyte polymer membrane has a thickness of 20 to 175 microns;
the anode electrocatalyst layer has a thickness of 20 to 100 microns, and
said first electrocatalyst composition 45 to 80 wt% of said nanoparticles comprising an alloy of platinum and ruthenium; and
said cathode electrocatalyst layer has a thickness of 20 to 50 microns,
and said second electrocatalyst composition comprises 45 to 80 wt% of said nanoparticles comprising platinum.

9. The membrane electrode assembly of any preceding claim wherein the ratio of the thickness of the anode electrocatalyst layer to the thickness of the cathode electrocatalyst layer is greater than 1:1, or greater than 1.5:1.

10. The membrane electrode assembly of any preceding claim wherein the atomic ratio of platinum to ruthenium in said anode electrocatalyst layer (b) is 40:60 to 70:30, or 50:50.

11. The membrane electrode assembly of any preceding claim wherein said nanoparticles in each of said layers (b) and (c) have a number average particle size of from 2 to 5 nm.

12. The membrane electrode assembly of any preceding claim wherein said carbon substrate particles of each of said first and second electrocatalyst compositions have a number average particle size of from 10 to 100 nm.

13. The membrane electrode assembly of any preceding claim wherein each of said layers (b) and (c) further comprises a proton-conducting polymer material.

14. The membrane electrode assembly of claim 13 wherein said proton conducting polymer material is present in said anode electrocatalyst layer (b) in an amount between 10 and 30 %, or between 15 and 25%, by weight of the anode electrocatalyst layer.

15. The membrane electrode assembly of claim 13 or claim 14 wherein said proton-conducting polymer material is present in said cathode electrocatalyst layer (c) in an amount between 10 and 20%, or 15%, by weight of the cathode electrocatalyst layer.

16. The membrane electrode assembly of any of claims 1-6 or 9-15, wherein said solid electrolyte polymer membrane (a) has a thickness of 20 to 175 microns, or 25 to 150 microns, or 50 to 125 microns.

## Patentansprüche

1. Eine Direktmethanolbrennstoffzellen(DMFC)-Membran-Elektroden-Baugruppe enthaltend:
(a) eine Festelektrolytpolymermembran;
(b) auf einer Oberfläche der Membran angeordnete Anodenelektrokatalysatorschicht enthaltend eine erste Elektrokatalysatorzusammensetzung enthaltend Kohlenstoffsubstratpartikel und Nanopartikel enthaltend eine Legierung von Platin und Ruthenium angeordnet auf der Oberfläche der Substratpartikel;
(c) eine an einer entgegengesetzten Oberfläche der Membran angeordnete Kathodenelektrokatalysatorschicht, wobei die Kathodenschicht eine von besagter erster Elektrokatalysatorzusammensetzung verschiedene zweite Elektrokatalysatorzusammensetzung enthaltend Kohlenstoffsubstratpartikel und Nanopartikel enthaltend auf der Oberfläche der Substratpartikel angeordnetes Platin enthält;
(d) eine an der von besagter Membran entfernten Oberfläche besagter Anodenelektrokatalysatorschicht angeordnete Anodengasdiffusionsschicht; und
(e) eine an der von besagter Membran entfernten Oberfläche besagter Kathodenelektrokatalysatorschicht angeordnete Kathodengasdiffusionsschicht,
worin besagte Legierung aus Platin und Ruthenium in besagter Anodenelektrokatalysatorschicht (b) in einer Beladung von 2,5 bis 3,5 mg pro cm² der aktiven Fläche der Anodenschicht vorliegt, besagtes Platin in besagter Kathodenelektrokatalysatorschicht (c) in einer Beladung von 0,75 bis 2,5 mg pro cm² der aktiven Fläche der Kathodenschicht vorliegt,
**dadurch gekennzeichnet, dass** das Verhältnis des Gewichts pro cm² der aktiven Fläche der in besagter Anodenelektrokatalysatorschicht (b) vorhandenen Legierung aus Platin und Ruthenium zu dem Gewicht pro cm² der aktiven Fläche des in besagter Kathodenelektrokatalysatorschicht (c) vorhandenen Platins zwischen 1,5:1 und 3:1 beträgt.

2. Die Membran-Elektroden-Baugruppe des Anspruchs 1, worin besagte Legierung aus Platin und Ruthenium in besagter Anodenelektrokatalysatorschicht (b) in einer Beladung von 3 mg von Platin und Ruthenium pro cm² der aktiven Fläche der Anodenschicht vorliegt.

3. Die Membran-Elektroden-Baugruppe des Anspruchs 1 oder Anspruchs 2, worin besagte erste Elektrokatalysatorzusammensetzung 45 bis 80 Ges.-% oder 60 bis 75 Ges.-% besagter Nanopartikel enthaltend eine Legierung aus Platin und Ruthenium umfasst.

4. Die Membran-Elektroden-Baugruppe eines beliebigen der vorstehenden Ansprüche, worin besagte Anodenelektrokatalysatorschicht (b) eine Dicke von 20 bis 100 Mikron, oder 40 bis 80 Mikron hat.

5. Die Membran-Elektroden-Baugruppe eines beliebigen der vorstehenden Ansprüche, worin besagtes Platin in besagter Kathodenelektrokatalysatorschicht (c) in einer Beladung von 1 bis 2 mg oder 1,5 mg von Platin pro cm² der aktiven Fläche der Kathodenschicht vorliegt.

6. Die Membran-Elektroden-Baugruppe eines beliebigen der vorstehenden Ansprüche, worin besagte zweite Elektrokatalysatorzusammensetzung 45 bis 80 Ges.-% oder 60 bis 75 Ges.-% besagter Platin enthaltender Nanopartikel umfasst.

7. Die Membran-Elektroden-Baugruppe eines beliebigen der vorstehenden Ansprüche, worin besagte Kathodenelektrokatalysatorschicht (c) eine Dicke von 20 bis 50 Mikron, oder 25 bis 35 Mikron hat.

8. Die Die Membran-Elektroden-Baugruppe des Anspruchs 1, worin:
die Festelektrolytpolymermembran eine Dicke von 20 bis 175 Mikron hat;
die Anodenelektrokatalysatorschicht eine Dicke von 20 bis 100 Mikron hat und besagte erste Elektrokatalysatorzusammensetzung 45 bis 80 Ges.-% besagter Nanopartikel enthaltend eine Legierung aus Platin und Ruthenium enthält; und
besagte Kathodenelektrokatalysatorschicht eine Dicke von 20 bis 50 Mikron hat und
besagte zweite Elektrokatalysatorzusammensetzung 45 bis 80 Ges.-% besagter Platin enthaltender Nanopartikel umfasst.

9. Die Membran-Elektroden-Baugruppe eines beliebigen der vorstehenden Ansprüche, worin das Verhältnis der Dicke der Anodenelektrokatalysatorschicht zur Dicke der Kathodenelektrokatalysatorschicht größer als 1:1 oder größer als 1,5:1 ist.

10. Die Membran-Elektroden-Baugruppe eines beliebigen der vorstehenden Ansprüche, worin das atomare Verhältnis von Platin zu Ruthenium in besagter Anodenelektrokatalysatorschicht (b) 40:60 bis 70:30 oder 50:50 beträgt.

11. Die Membran-Elektroden-Baugruppe eines beliebigen der vorstehenden Ansprüche, worin besagte Nanopartikel in jeder der besagten Schichten (b) und (c) ein Zahlenmittel der Partikelgröße von 2 bis 5 nm aufweist.

12. Die Membran-Elektroden-Baugruppe eines beliebigen der vorstehenden Ansprüche, worin besagte Kohlenstoffsubstratpartikel jeder der besagten ersten und zweiten Elektrokatalysatorzusammensetzungen ein Zahlenmittel der Partikelgröße von 10 bis 100 nm aufweist.

13. Die Membran-Elektroden-Baugruppe eines beliebigen der vorstehenden Ansprüche, worin jede besagter Schichten (b) und (c) weiterhin ein protonenleitendes Polymermaterial umfasst.

14. Die Membran-Elektroden-Baugruppe des Anspruchs 13, worin besagtes protonenleitendes Polymermaterial in besagter Anodenelektrokatalysatorschicht (b) in einer Menge zwischen 10 und 30% oder zwischen 15 und 25°/ bezogen auf das Gewicht der Anodenelektrokatalysatorschicht vorliegt.

15. Die Membran-Elektroden-Baugruppe des Anspruchs 13 oder des Anspruchs 14, worin besagtes protonenleitendes Polymermaterial in besagter Kathodenelektrokatalysatorschicht (c) in einer Menge zwischen 10 und 20 % oder 15% bezogen auf das Gewicht der Kathodenelektrokatalysatorschicht vorliegt.

16. Die Membran-Elektroden-Baugruppe eines beliebigen der Ansprüche 1-6 oder 9-15, worin besagte Festelektrolytpolymermembran (a) eine Dicke von 20 bis 175 Mikron oder von 25 bis 150 Mikron oder von 50 bis 125 Mikron hat.

## Revendications

1. Ensemble membrane-électrodes pour DMFC comprenant :
(a) une membrane polymère électrolyte solide ;
(b) une couche anodique d'électrocatalyseur disposée à une surface de la membrane et comprenant une première composition d'électrocatalyseur comprenant des particules de substrat de carbone et des nanoparticules comprenant un alliage de platine et de ruthénium disposées sur la surface des particules de substrat ;
(c) une couche cathodique d'électrocatalyseur disposée à une surface opposée de la membrane, la couche cathodique comprenant une seconde composition d'électrocatalyseur différente de ladite première composition d'électrocatalyseur et comprenant des particules de substrat de carbone et des nanoparticules comprenant du platine disposées sur la surface des particules de substrat ;
(d) une couche anodique de diffusion de gaz disposée à la surface de ladite couche anodique d'électrocatalyseur de façon éloignée de ladite membrane ; et
(e) une couche cathodique de diffusion de gaz disposée à la surface de ladite couche cathodique d'électrocatalyseur de façon éloignée de ladite membrane,
ledit alliage de platine et de ruthénium étant présent dans ladite couche anodique d'électrocatalyseur (b) à une charge de 2,5 à 3,5 mg par cm² de la zone active de couche anodique, ledit platine étant présent dans ladite couche cathodique d'électrocatalyseur (c) à une charge de 0,75 à 2,5 mg par cm² de la zone active de couche cathodique, **caractérisé par le fait que** le rapport du poids par cm² de zone active dudit alliage de platine et de ruthénium présent dans ladite couche anodique d'électrocatalyseur (b) au poids par cm² de zone active de platine présent dans ladite couche cathodique d'électrocatalyseur (c) est entre 1,5:1 et 3:1.

2. Ensemble membrane-électrodes selon la revendication 1, dans lequel ledit alliage de platine et de ruthénium est présent dans ladite couche anodique d'électrocatalyseur (b) à une charge de 3 mg de platine et de ruthénium par cm² de la zone active de couche anodique.

3. Ensemble membrane-électrodes selon l'une des revendications 1 ou 2, dans lequel ladite première composition d'électrocatalyseur comprend 45 à 80 % en poids, ou 60 à 75 % en poids, desdites nanoparticules comprenant un alliage de platine et de ruthénium.

4. Ensemble membrane-électrodes selon l'une quelconque des revendications précédentes, dans lequel ladite couche anodique d'électrocatalyseur (b) a une épaisseur de 20 à 100 microns, ou de 40 à 80 microns.

5. Ensemble membrane-électrodes selon l'une quelconque des revendications précédentes, dans lequel ledit platine est présent dans ladite couche cathodique d'électrocatalyseur (c) à une charge de 1 à 2 mg, ou de 1,5 mg, de platine par cm² de la zone active de couche cathodique.

6. Ensemble membrane-électrodes selon l'une quelconque des revendications précédentes, dans lequel ladite seconde composition d'électrocatalyseur comprend 45 à 80 % en poids, ou 60 à 75 % en poids, desdites nanoparticules comprenant du platine.

7. Ensemble membrane-électrodes selon l'une quelconque des revendications précédentes, dans lequel ladite couche cathodique d'électrocatalyseur (c) a une épaisseur de 20 à 50 microns, ou de 25 à 35 microns.

8. Ensemble membrane-électrodes selon la revendication 1, dans lequel :
la membrane polymère électrolyte solide a une épaisseur de 20 à 175 microns ;
la couche anodique d'électrocatalyseur a une épaisseur de 20 à 100 microns et ladite première composition d'électrocatalyseur comprend 45 à 80 % en poids desdites nanoparticules comprenant un alliage de platine et de ruthénium ; et
ladite couche cathodique d'électrocatalyseur a une épaisseur de 20 à 50 microns et ladite seconde composition d'électrocatalyseur comprend 45 à 80 % en poids desdites nanoparticules comprenant du platine.

9. Ensemble membrane-électrodes selon l'une quelconque des revendications précédentes, dans lequel le rapport de l'épaisseur de la couche anodique d'électrocatalyseur à l'épaisseur de la couche cathodique d'électrocatalyseur est supérieur à 1:1, ou supérieur à 1,5:1.

10. Ensemble membrane-électrodes selon l'une quelconque des revendications précédentes, dans lequel le rapport atomique du platine au ruthénium dans ladite couche anodique d'électrocatalyseur (b) est de 40:60 à 70:30, ou de 50:50.

11. Ensemble membrane-électrodes selon l'une quelconque des revendications précédentes, dans lequel lesdites nanoparticules dans chacune desdites couches (b) et (c) ont une dimension de particule moyenne en nombre de 2 à 5 nm.

12. Ensemble membrane-électrodes selon l'une quelconque des revendications précédentes, dans lequel lesdites particules de substrat de carbone de chacune desdites première et seconde compositions d'électrocatalyseur ont une dimension de particule moyenne en nombre de 10 à 100 nm.

13. Ensemble membrane-électrodes selon l'une quelconque des revendications précédentes, dans lequel chacune desdites couches (b) et (c) comprend en outre une matière polymère conductrice de protons.

14. Ensemble membrane-électrodes selon la revendication 13, dans lequel ladite matière polymère conductrice de protons est présente dans ladite couche anodique d'électrocatalyseur (b) dans une quantité entre 10 et 30 %, ou entre 15 et 25 %, en poids, de la couche anodique d'électrocatalyseur.

15. Ensemble membrane-électrodes selon l'une des revendications 13 ou 14, dans lequel ladite matière polymère conductrice de protons est présente dans ladite couche cathodique d'électrocatalyseur (c) dans une quantité entre 10 et 20 %, ou de 15 %, en poids, de la couche cathodique d'électrocatalyseur.

16. Ensemble membrane-électrodes selon l'une quelconque des revendications 1 à 6 ou 9 à 15, dans lequel ladite membrane polymère électrolyte solide (a) a une épaisseur de 20 à 175 microns, ou de 25 à 150 microns, ou de 50 à 125 microns.
